# EUROPÄISCHE PATENTSCHRIFT

(11) **EP 0 464 415 B1**
(45) Veröffentlichungstag und Bekanntmachung des Hinweises auf die Patenterteilung: **31.03.1993**
(21) Anmeldenummer: 91109616.2
(22) Anmeldetag: 12.06.1991
(51) Int. Cl.: B60G 3/14, B60G 21/055, B60G 7/02, B60G 11/27

(54) **Kurbelachse für Kraftfahrzeuge und Anhänger**
Suspension with longitudinal arms for motorvehicles and trailers
Suspension à bras longitudinaux pour véhicules à moteur et remorques

(30) Priorität: 04.07.1990 DE 4021096
(43) Veröffentlichungstag der Anmeldung: 08.01.1992
(73) Patentinhaber: Bergische Achsenfabrik Fr. Kotz & Söhne, 51674 Wiehl (DE)
(72) Erfinder: Kopplow, Hans-Werner, Dipl.-Ing., W-5223 Nümbrecht (DE); Thiel, Klaus-Hermann, Dipl.-Ing., W-5220 Waldbröl (DE)
(74) Vertreter: Stenger, Watzke & Ring Patentanwälte

(56) Entgegenhaltungen:
- DE-A- 1 927 340
- DE-A- 3 031 353
- FR-A- 2 079 967
- GB-A- 426 703
- US-A- 2 597 122
- US-A- 3 822 908

## Beschreibung

Die Erfindung betrifft eine Kurbelachse für Kraftfahrzeuge und Anhänger mit einzeln an Längslenkern aufgehängten Rädern, wobei jeder Längslenker über ein Lagerelement federnd gegenüber dem fahrzeugaufbau abgestützt und um eine gemeinsame, quer zur Fahrzeuglängsrichtung verlaufende Achse verschwenkbar am Fahrzeugaufbau gelagert ist, und die gegenüber dem Fahrzeugaufbau verdrehbare Lagerelemente der beiden Längslenker miteinander durch ein biegesteifes Verbindungsrohr verbunden sind, das zwischen den beiden Radaufhängungen verläuft und das gegenüber den Lagerelementen der Radaufhängungen frei drehbar ist.

Kurbelachsen der voranstehend beschriebenen Art sind in einer Mehrzahl von Ausführungen bekannt, und zwar sowohl für angetriebene als auch für gezogene Achsen. In beiden Fällen muß dafür gesorgt werden, daß die von den einzeln aufgehängten Rädern auf den Fahrzeugaufbau übertragenen Biegebeanspruchungen zuverlässig und ohne örtliche Überbeanspruchungen in den Fahrzeugaufbau eingeleitet werden.

Beispielsweise ist aus der US-A-3,822,908 eine Kurbelachse für Kraftfahrzeuge bekannt, bei der zwei Halbachsen in einem am Fahrzeugrahmen angeordneten biegesteifen Rohr angeordnet sind, welche an ihrem aus dem Rohr herausragenden Ende jeweils einen Längslenker haben. Die Längslenker sind unabhängig voneinander verschwenkbar und mittelbar über die Halbachsen an Federelementen, nämlich Luftfederbälgen federnd abgestützt.

Ausgehend von diesem Stand der Technik liegt der Erfindung die **Aufgabe** zugrunde, eine Kurbelachse der eingangs beschriebenen Art zu schaffen, die bei geringem Raumbedarf eine zuverlässige Einleitung der an den einzeln aufgehängten Rädern auftretenden Kräfte in den Fahrzeugaufbau mit einfachen Mitteln ermöglicht und örtliche Überbeanspruchungen der am Fahrzeugaufbau ausgebildeten Lagerstellen für die Radaufhängungen durch Beigebeanspruchungen vermeidet, wobei in einfacher Weise ein Stabilisator in die Kurbelachse integrierbar ist.

Die erfindungsgemäße **Lösung** dieser Aufgabenstellung sieht vor, daß zwischen den Längslenkern beider Radaufhängungen ein in dem Rohr verlaufender Verbindungsstab als Stabilisator angeordnet ist, daß die Lagerelemente Innenrohre und darin befestigte Lagerhülsen umfasssen, daß die Innenrohre jeweils eine Lagerhülse zur Mitte des Fahrzeugrahmens hin überragen, und daß auf diesen Endstücken der Innenrohre das Verbindungsrohr frei drehbar gelagert ist.

Das die gegenüber dem Fahrzeugaufbau verdrehbaren Lagerelemente der beiden Längslenker miteinander verbindende und biegesteife Rohr überträgt die bei einseitiger, unterschiedlicher Belastung der beiden Radaufhängungen auftretenden Kräfte, die wegen der exzentrischen Lagerung der Längslenker zu Biegebeanspruchungen an den Lagerstellen gegenüber dem Fahrzeugaufbau führen, von der jeweils stärker belasteten Fahrzeugseite auf die jeweils andere Seite, ohne hierbei die unabhängige Aufhängung der beiden Räder zu behindern, da das Verbindungsrohr erfindungsgemäß gegenüber den Lagerelementen frei drehbar gelagert ist. Es findet somit trotz der unabhängigen Aufhängung der beiden Räder ein Kraft- und Momentenausgleich zwischen den beiden Radaufhängungen statt, wodurch es möglich ist, konstruktiv einfache und raumsparend unterzubringende Lagerelemente zu verwenden und auf aufwendige Verstärkungen der am Fahrzeugaufbau bzw. Fahrzeugrahmen ausgebildeten Lagerstellen für die Radaufhängungen zu verzichten. Ferner ist zwischen den Längslenkern beider Radaufhängungen ein in dem Rohr verlaufender Verbindungsstab als Stabilisator angeordnet. Dieser durchgehende Verbindungsstab dient der Verbindung beider Radaufhängungen, d.h. zur Spurweiten-Fixierung.

Gemäß einem weiteren Merkmal der Erfindung können die verdrehbaren Lagerelemente der beiden Längslenker zusätzlich durch den als Stabilisator wirkenden Verbindungsstab miteinander verbunden sein. Dieser Stabilisator erzeugt beim Überfahren einseitiger Hindernisse durch die Kopplung der beiden Räder Gegenkräfte, welche die Wankbewegungen des Fahrzeuges vermindern, wobei das den Stabilisator umgebende Verbindungsrohr der Erfindung dafür sorgt, daß der Stabilisator von Biegebeanspruchungen freigehalten und ausschließlich einer reinen Torsionsbeanspruchung unterworfen wird.

Bei einer bevorzugten Ausführungsform der erfindungsgemäßen Kurbelachse sind die Längslenker jeweils über mindestens eine Luftfeder gegenüber dem Fahrzeugaufbau abgestützt, die gemeinsam zum Absenken des Fahrzeugaufbaus entlüftet werden können. Hierdurch ergibt sich eine besonders einfache, vorzugsweise als gezogene Achse ausgeführte Kurbelachse, die ohne großen zusätzlichen Bauaufwand dazu herangezogen werden kann, den Fahrzeugaufbau bei Bedarf abzusenken, beispielsweise zum Be- oder Entladen und zum Abstellen auf fahrzeugeigenen Stützen.

Bei einer Verwendung der erfindungsgemäßen Kurbelachse an einem Kraftfahrzeug oder Anhänger mit einem den Fahrzeugaufbau tragenden Fahrzeugrahmen wird gemäß weiteren bevorzugten Merkmalen der Erfindung vorgeschlagen, die Luftfedern zwischen den Längsträgern des Fahrzeugrahmens anzuordnen und mit ihrer unteren Konsole jeweils an einem Tragarm abzustützen, der über die Lagerhülse drehbar in einem am Längsträger angeordneten Achsführungsrohr gelagert und unverdrehbar mit dem zugehörigen Längslenker verbunden ist. Mit dieser Konstruktion ergibt sich eine größtmögliche Bodenfreiheit; weiterhin wird erreicht, daß kein Bauelement der Radaufhängung die Oberkante der Fahrzeugrahmens überragt, so daß insoweit bei der Ausgestaltung des Fahrzeugaufbaus keine Rücksicht auf die Radaufhängungen genommen werden muß.

Bei einer bevorzugten Weiterbildung dieser Kurbelachse ist die Lagerhülse des die Luftfeder abstützenden Tragarmes mit dem im Achsführungsrohr gelagerten Innenrohr verbunden, wobei vorzugsweise zwischen Achsführungsrohr und Innenrohr Lagerbuchsen angeordnet sind. Hierdurch ergibt sich eine einfache und große Lagerflächen aufweisende Konstruktion, die zudem güngstige Voraussetzungen für die besonders einfache erfindungsgemäße Anordnung des Verbindungsrohres schafft.

Gemäß einem weiteren bevorzugten Merkmal der Erfindung kann eine besonders einfache Lagerung des Längslenkers am Achsführungsrohr dadurch erreicht werden, daß die Lagerhülse jedes Tragarmes über mindestens einen Verbindungsstab formschlüssig mit einem am Längslenker angeordneten Lagerstück verbunden ist. Der Verbindungsstab dient hierbei der Fixierung von Tragarm und Längslenker zueinander in Achslängsrichtung und relativ zum Achsführungsrohr, d.h. zum Fahrzeugrahmen. Es hat sich ferner als vorteilhaft erwiesen, die Lagerhülsen und die Lagerstücke jeweils über eine Madenschraube in Achslängsrichtung an dem durchgehenden Verbindungsstab festzulegen. Hierdurch wird eine einfach handhabbare Einstellvorrichtung für die Spurweiten-Fixierung geschaffen.

Zwischen jeder Radaufhängung und dem Fahrzeugaufbau bzw. Fahrzeugrahmen kann in bekannter Weise ein Schwingungsdämpfer angeordnet sein. Außerdem ist es in an sich bekannter Weise möglich, die Luftfedern mit einer beim Anheben und Absenken des Fahrzeuges abschaltbaren Niveauregulierung auszurüsten und als Sensor zur lastabhängigen Bremsansteuerung auszubilden.

Auf der Zeichnung ist ein Ausführungsbeispiel der erfindungsgemäßen Kurbelachse dargestellt, und zwar zeigen:
- Fig. 1: einen waagerechten Schnitt durch eine an die Unterseite der Längsträger eines Fahrzeugrahmens angeschraubte Kurbelachse,
- Fig. 2: einen senkrechten Schnitt gemäß der Schnittlinie II - II in Fig.1 mit einer Seitenansicht der Kurbelachse,
- Fig. 3: einen weiteren senkrechten Schnitt gemäß der Schnittlinie III - III in Fig.1 im Bereich der Luftfeder,
- Fig. 4: eine der Fig.2 entsprechende Darstellung bei entlüfteter Luftfeder, d.h. mit abgesenktem Fahrzeugrahmen und
- Fig. 5: eine der Fig.3 entsprechende Darstellung in der abgesenkten Stellung.

Beim dargestellten Ausführungsbeispiel ist die Kurbelachse am Fahrzeugrahmen eines im übrigen nicht dargestellten Fahrzeuges angeschraubt, wobei von diesem Fahrzeugrahmen Teile der beiden Längsträger 1 und ein Querträger 2 zu erkennen sind. Mittels einer Tragkonsole 3 ist an jedem Längsträger 1 ein Achsführungsrohr 4 befestigt, das zur Lagerung jeweils einer Radaufhängung dient.

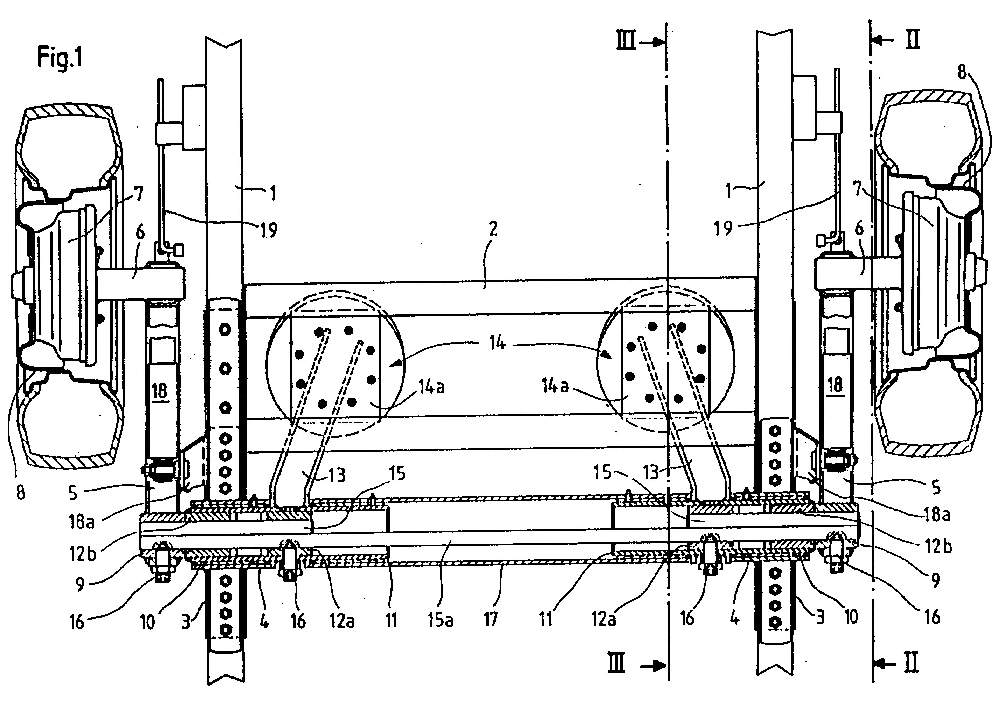

Wie insbesondere aus Fig.1 hervorgeht, umfaßt jede Radaufhängung einen Längslenker 5, an dessen einem Ende ein Achsstummel 6 befestigt ist, der über eine mit einer Bremsvorrichtung versehene Nabe 7 ein Rad 8 trägt. Das andere Ende des Längslenkers 5 ist mit einem Lagerstück 9 versehen.

Im Achsführungsrohr 4 ist über Lagerbuchsen 10 ein Innenrohr 11 drehbar gelagert, in dem zwei Lagerhülsen 12a und 12b befestigt sind. Im Bereich der Lagerhülse 12a ist an das Innenrohr 11 ein Tragarm 13 angeschweißt, der zur Abstützung einer Luftfeder 14 dient.

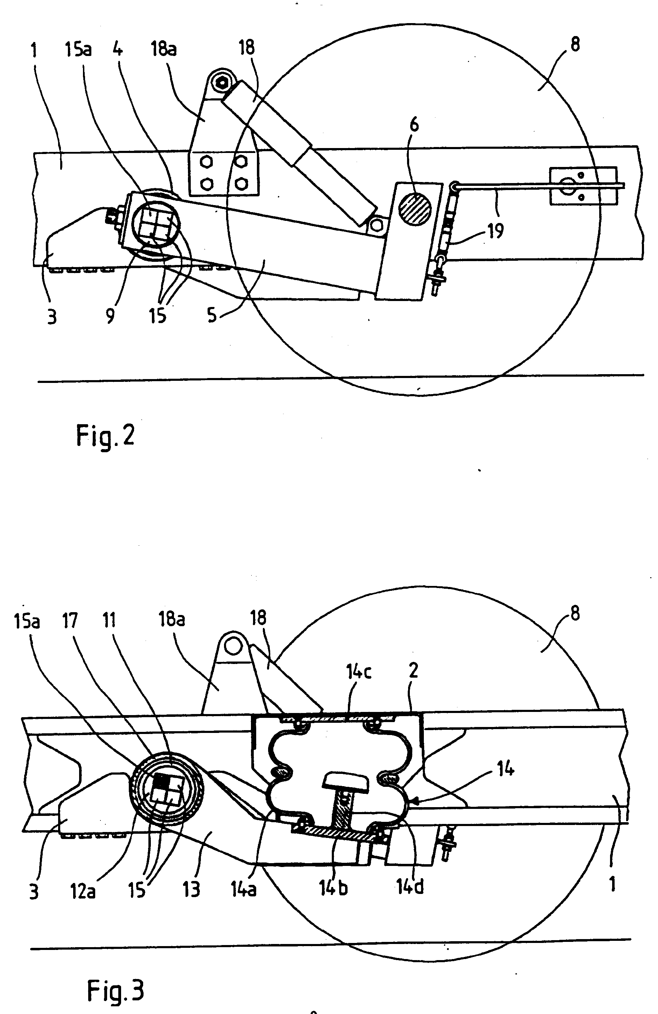

Wie am besten in Fig.3 zu erkennen ist, umfaßt diese Luftfeder 14 einen Luftfederbalg 14a, der über eine untere Konsole 14b am Tragarm 13 und über eine obere Konsole 14c am Querträger 2 des Fahrzeugrahmens befestigt ist. Im Inneren des Luftfederbalges 14a ist außerdem eine Federstütze 14d angeordnet, die einerseits als Überlastsicherung und andererseits als Anlage der oberen Konsole 14c in der abgesenkten Stellung gemäß Fig.5 dient.

Die verschwenkbare Lagerung des Längslenkers 5 erfolgt beim Ausführungsbeispiel durch vier Verbindungsstäbe 15, 15a, die formschlüssig einerseits in das am Längslenker 5 befestigte Lagerstück 9 und andererseits in die Lagerhülsen 12a und 12b eingreifen. Auf diese Weise ist jeder Längslenker 5 starr mit dem zugehörigen Tragarm 13 und dem zugehörigen Innenrohr 11 verbunden, das seinerseits verdrehbar im jeweiligen Achsführungsrohr 4 gelagert ist. Eine Fixierung des Lagerstückes 9 und der Lagerhülse 12a und damit des Innenrohres 11 in Achslängsrichtung erfolgt durch Madenschrauben 16, die durch das Lagerstück 9 bzw. die Lagerhülse 12a hindurch in mindestens einen der Verbindungsstäbe 15 bzw. 15a eingreifen und auf diese Weise verhindern, daß die Achsaufhängung seitlich aus dem Achsführungsrohr 4 herausrutschen kann.

Wie besonders deutlich aus Fig.1 hervorgeht, werden die in die Räder 8 eingeleiteten Kräfte über die Längslenker 5 außermittig in die verdrehbaren Lagerelemente der Radaufhängung eingeleitet. Die Achsführungsrohre 4 und damit die Längsträger 1 müssen demzufolge Biegebeanspruchungen aufnehmen. Um diese Biegebeanspruchungen auf niedrige Werte zu reduzieren, sind die Innenrohre 11 in Richtung zur Fahrzeugmitte über die Lagerhülsen 12a hinaus verlängert. Auf diese verlängerten Endstücke ist unter Zwischenschaltung jeweils einer Lagerbuchse 10 ein biegesteifes Rohr 17 aufgesetzt; hierdurch werden aus einer stärkeren Belastung einer Radaufhängung herrührende Biegebeanspruchungen über das Verbindungsrohr 17 auf die Lagerstelle der jeweils anderen Radaufhängung übertragen, so daß ein gewisser Ausgleich bei gleichzeitiger Lastreduzierung der stärker belasteten Lagerstelle stattfindet. Damit keine gegenseitige Beeinflussung der unabhängig voneinander wirkenden Radaufhängungen auftritt, ist das Verbindungsrohr 17 frei drehbar auf den Endstücken der beiden Innenrohre 11 gelagert.

Das Ausführungsbeispiel in Fig.1 zeigt weiterhin, daß einer der vier Verbindungsstäbe, nämlich der Verbindungsstab 15a durchgehend ausgeführt ist. Er verläuft auch innerhalb des Verbindungsrohres 17 und wirkt in an sich bekannter Weise als Stabilisator. Das voranstehend beschriebene Verbindungsrohr 17 bewirkt hierbei, daß dieser als Stabilisator wirkende Verbindungsstab 15a von Biegekräften freigehalten und demzufolge ausschließlich durch Torsionskräfte belastet wird. Ein weiterer Vorteil des durchgehenden Verbindungsstabes 15a ist darin zu sehen, daß er die gegenüber dem jeweiligen Achsführungsrohr 4 verdrehbaren Lagerelemente der beiden Längslenker 5 miteinander verbindet, so daß er gleichzeitig der Spurweiten-Fixierung dient und in Längsrichtung der Achse auftretende Kräfte aufnimmt.

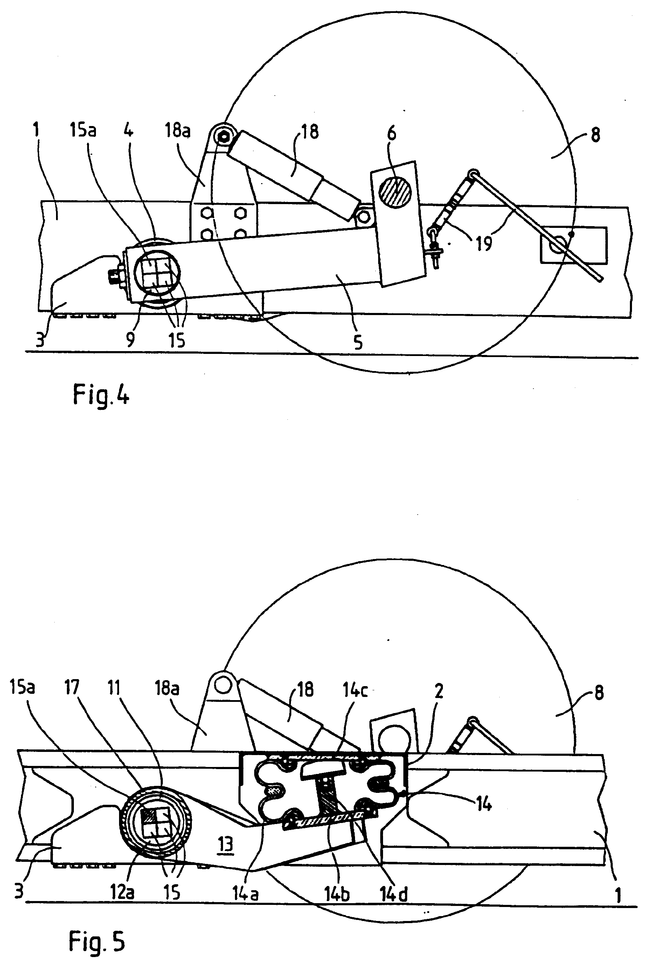

Beim Ausführungsbeispiel ist zwischen jedem Längslenker 5 und dem zugehörigen Längsträger 1 des Fahrzeugrahmens ein Schwingungsdämpfer 18 angeordnet, dessen Befestigung am Längsträger 1 mittels einer Konsole 18a erfolgt. Außerdem zeigen die Zeichnungen ein am Längsträger 5 angreifendes Gestänge 19, das der lastabhängigen Bremsansteuerung und einer Niveauregulierung dient, die abgeschaltet werden kann, wenn zwecks Absenkung des Fahrzeugs die Luftfedern 14 entlastet werden. Die Figuren 4 und 5 zeigen einen Zustand mit abgesenktem Fahrgestell, wie durch einen Vergleich der Fig.4 mit der Fig.2 bzw. der Fig.5 mit der Fig.3 hervorgeht.

### Bezugszeichenliste:

- 1: Längsträger
- 2: Querträger
- 3: Tragkonsole
- 4: Achsführungsrohr
- 5: Längslenker
- 6: Achsstummel
- 7: Nabe
- 8: Rad
- 9: Lagerstück
- 10: Lagerbuchse
- 11: Innenrohr
- 12a: Lagerhülse
- 12b: Lagerhülse
- 13: Tragarm
- 14: Luftfeder
- 14a: Luftfederbalg
- 14b: untere Konsole
- 14c: obere Konsole
- 14d: Federstütze
- 15: Verbindungsstab
- 15a: Verbindungsstab
- 16: Madenschraube
- 17: Verbindungsrohr
- 18: Schwingungsdämpfer
- 18a: Konsole
- 19: Gestänge

## Patentansprüche

1. Kurbelachse für Kraftfahrzeuge und Anhänger mit einzeln an Längslenkern (5) aufgehängten Rädern (8), wobei jeder Längslenker (5) über ein Lagerelement (11,12a,12b) federnd gegenüber dem Fahrzeugaufbau abgestützt und um eine gemeinsame, quer zur Fahrzeuglängsrichtung verlaufende Achse verschwenkbar am Fahrzeugaufbau gelagert ist, und die gegenüber dem Fahrzeugaufbau verdrehbare Lagerelemente (11,12a,12b) der beiden Längslenker (5) miteinander durch ein biegesteifes Verbindungsrohr (17) verbunden sind, das zwischen den beiden Radaufhängungen verläuft und das gegenüber den Lagerelementen (11,12a,12b) der Radaufhängungen frei drehbar ist,
**dadurch gekennzeichnet**,
daß zwischen den Längslenkern (5) beider Radaufhängungen ein in dem Rohr (17) verlaufender Verbindungsstab (15a) als Stabilisator angeordnet ist, daß die Lagerelemente Innenrohre (11) und darin befestigte Lagerhülsen (12a) umfassen,
daß die Innenrohre (11) jeweils eine Lagerhülse (12a) zur Mitte des Fahrzeugrahmens hin überragen, und
daß auf diesen Endstücken der Innenrohre (11) das Verbindungsrohr (17) frei drehbar gelagert ist.

2. Kurbelachse nach Anspruch 1, dadurch gekennzeichnet, daß die verdrehbaren Lagerelemente (11,12a,12b) der beiden Längslenker (5) zusätzlich durch den als Stabilisator wirkenden Verbindungsstab (15a) miteinander verbunden sind.

3. Kurbelachse nach Anspruch 1 oder 2, dadurch gekennzeichnet, daß die Längslenker (5) jeweils über mindestens eine Luftfeder (14) gegenüber dem Fahrzeugaufbau abgestützt sind, die gemeinsam zum Absenken des Fahrzeugaufbaus entlüftbar sind.

4. Kurbelachse nach mindestens einem der Ansprüche 1 bis 3 mit einem den Fahrzeugaufbau tragenden Fahrzeugrahmen, dadurch gekennzeichnet, daß die Luftfeder (14) zwischen den Längsträgern (1) des Fahrzeugrahmens angeordnet und mit ihrer unteren Konsole (14b) jeweils an einem Tragarm (13) abgestützt sind, der über das Lagerelement (11,12a,12b) drehbar in einem am Längsträger (1) angeordneten Achsführungsrohr (4) gelagert und unverdrehbar mit dem zugehörigen Längslenker (5) verbunden ist.

5. Kurbelachse nach Anspruch 4, dadurch gekennzeichnet, daß die Lagerhülse (12a) des die Luftfeder (14) abstützenden Tragarmes (13) mit dem in Achsführungsrohr (4) gelagerten Innenrohr (11) verbunden ist.

6. Kurbelachse nach Anspruch 5, dadurch gekennzeichnet, daß zwischen Achsführungsrohr (4) und Innenrohr (11) Lagerbuchsen (10) angeordnet sind.

7. Kurbelachse nach mindestens einem der Ansprüche 1 bis 6, dadurch gekennzeichnet, daß die Lagerhülse (12a) jedes Tragarmes (13) über mindestens einen Verindungsstab (15,15a) formschlüssig mit einem am Längslenker (5) angeordneten Lagerstück (9) verbunden ist.

8. Kurbelachse nach Anspruch 7, dadurch gekennzeichnet, daß die Lagerhülsen (12a) und die Lagerstücke (9) jeweils über eine Madenschraube (16) in Achslängsrichtung an dem durchgehenden Verbindungsstab (15a) festgelegt sind.

9. Kurbelachse nach mindestens einem der Ansprüche 1 bis 8, dadurch gekennzeichnet, daß zwischen jeder Radaufhängung und dem Fahrzeugrahmen ein Schwingungsdämpfer (18) angeordnet ist.

10. Kurbelachse nach mindestens einem der Ansprüche 1 bis 9, dadurch gekennzeichnet, daß die Luftfedern (14) mit einer beim Anheben und Absenken des Fahrzeuges abschaltbaren Niveauregulierung ausgerüstet und als Sensor zur lastabhängigen Bremsansteuerung ausgebildet sind.

## Claims

1. Cranked axle for motor vehicles and trailers with wheels (8) independently suspended on longitudinal links (5), each longitudinal link (5) being spring-supported relative to the vehicle superstructure by means of a bearing element (11, 12a, 12b) and being pivotably supported on the vehicle superstructure about a common axis extending transverse to the longitudinal direction of the vehicle and the bearing elements (11, 12a, 12b) of the two longitudinal links (5), which are rotatable relative to the vehicle superstructure, being connected together by means of a connecting tube (17), which is stiff in bending, extends between the two wheel suspensions and is freely rotatable relative to the bearing elements (11, 12a, 12b) of the wheel suspensions, characterised in that a connecting rod (15a) extending in the tube (17) is arranged as the stabiliser between the longitudinal links (5) of the two wheel suspensions, that the bearing elements include inner tubes (11) and bearing sleeves (12a) fastened within them, that the inner tubes (11) each protrude beyond a bearing sleeve (12a) towards the centre of the vehicle chassis, and that the connecting tube (17) is supported so as to be freely rotatable on these end pieces of the inner tubes (11).

2. Cranked axle according to Claim 1, characterised in that the rotatable bearing elements (11, 12a, 12b) of the two longitudinal links (5) are additionally connected to one another by the connecting rod (15a) acting as the stabiliser.

3. Cranked axle according to Claim 1 or 2, characterised in that the longitudinal links (5) are respectively supported relative to the vehicle superstructure by at least one air spring (14), which air springs can be jointly evacuated to lower the vehicle superstructure.

4. Cranked axle according to at least one of the Claims 1 to 3 with a vehicle chassis supporting the vehicle superstructure, characterised in that the air springs (14) are located between the side members (1) of the vehicle chassis and are respectively supported by means of their lower brackets (14b) on a support arm (13), which is rotatably supported by means of the bearing element (11, 12a, 12b) in an axle guide tube (4) located on the side member (1) and is connected, so that it cannot be rotated, to the associated longitudinal link (5).

5. Cranked axle according to Claim 4, characterised in that the bearing sleeve (12a) of the support arm (13) supporting the air spring (14) is connected to the inner tube (11) supported in the axle guide tube (4).

6. Cranked axle according to Claim 5, characterised in that bearing bushes (10) are located between axle guide tube (4) and inner tube (11).

7. Cranked axle according to at least one of Claims 1 to 6, characterised in that the bearing sleeve (12a) of each support arm (13) is positively connected, (5) by means of at least one connecting rod (15, 15a), to a bearing piece (9) located on the longitudinal link.

8. Cranked axle according to Claim 7, characterised in that the bearing sleeves (12a) and the bearing pieces (9) are respectively fixed in the axial direction on the continuous connecting rod (15a) by means of a grub screw (16).

9. Cranked axle according to at least one of Claims 1 to 8, characterised in that a vibration damper (18) is located between each wheel suspension and the vehicle chassis.

10. Cranked axle according to at least one of Claims 1 to 9, characterised in that the air springs (14) are equipped with a level regulating system which can be switched off when raising and lowering the vehicle and are configured as sensor for brake actuation as a function of load.

## Revendications

1. Essieu à bras tirés destiné à des véhicules automobiles et à des remorques, comprenant des roues (8) suspendues de manière indépendantes sur des bras oscillants longitudinaux (5), chaque bras oscillant longitudinal (5) étant soutenu, par l'intermédiaire d'un élément de palier (11, 12a, 12b), de manière élastique par rapport à la superstructure du véhicule, et monté pivotant autour d'un axe commun qui s'étend transversalement à la direction longitudinale du véhicule, et les éléments de palier (11, 12a, 12b) des deux bras oscillants longitudinaux (5) susceptibles de tourner par rapport à la superstructure du véhicule, étant reliés entre-eux par un tube de liaison (17) rigide en flexion, qui s'étend entre les deux suspensions de roues, et qui peut tourner librement par rapport aux éléments de palier (11, 12a, 12b) des suspensions de roues,
caractérisé
en ce qu'entre les bras oscillants longitudinaux (5) des deux suspensions de roues, est disposée une barre de liaison (15a) s'étendant dans le tube (17) et faisant office de stabilisateur,
en ce que les éléments de palier englobent des tubes intérieurs (11) et des douilles de palier (12a) fixées à l'intérieur de ceux-ci,
en ce que les tubes intérieurs (11) dépassent chacun d'une douille de palier respective (12a), en direction du centre du châssis du véhicule, et
en ce que le tube de liaison (17) est monté librement tournant sur ces pièces d'extrémité des tubes intérieurs (11).

2. Essieu à bras tirés selon la revendication 1, caractérisé en ce que les éléments de palier (11, 12a, 12b) des deux bras oscillants longitudinaux (5), pouvant tourner relativement entre-eux, sont de plus reliés entre-eux par la barre de liaison (15a) agissant en tant que stabilisateur.

3. Essieu à bras tirés selon la revendication 1 ou 2, caractérisé en ce que chaque bras oscillant longitudinal (5) s'appuie sur la superstructure du véhicule, par l'intermédiaire d'au moins un ressort pneumatique (14), ces ressorts pneumatiques pouvant être purgés simultanément en vue d'abaisser la superstructure du véhicule.

4. Essieu à bras tirés selon l'une au moins des revendications 1 à 3, comportant un châssis de véhicule supportant la superstructure du véhicule, caractérisé en ce que les ressorts pneumatiques (14) sont disposés entre les longerons (1) du châssis du véhicule et s'appuient chacun, par l'intermédiaire de leur console inférieure (14b), sur un bras de support (13), qui est monté de manière tournante, par l'intermédiaire de l'élément de palier (11, 12a, 12b), dans un tube de guidage d'essieu (4) disposé sur le longeron (1), et qui est relié par une liaison fixe en rotation, au bras oscillant longitudinal (5) correspondant.

5. Essieu à bras tirés selon la revendication 4, caractérisé en ce que la douille de palier (12a) du bras de support (13) supportant le ressort pneumatique (14), est reliée au tube intérieur (11) monté dans le tube de guidage d'essieu (4).

6. Essieu à bras tirés selon la revendication 5, caractérisé en ce qu'entre le tube de guidage d'essieu (4) et le tube intérieur (11) sont disposés des coussinets de palier (10).

7. Essieu à bras tirés selon l'une au moins des revendications 1 à 6, caractérisé en ce que la douille de palier (12a) de chaque bras de support (13), est reliée par complémentarité de forme, par l'intermédiaire d'au oins une barre de liaison (15, 15a), à une pièce de palier (9) disposée sur le bras oscillant longitudinal (5).

8. Essieu à bras tirés selon la revendication 7, caractérisé en ce que les douilles de palier (12a) et les pièces de palier (9) sont chacune liées dans la direction longitudinale de l'essieu, à la barre de liaison continue (15a), par l'intermédiaire d'une vis sans tête (16).

9. Essieu à bras tirés selon l'une au moins des revendications 1 à 8, caractérisé en ce qu'entre chaque suspension de roue et le châssis du véhicule, est disposé un amortisseur (18).

10. Essieu à bras tirés selon l'une au moins des revendications 1 à 9, caractérisé en ce que les ressorts pneumatiques (14) sont équipés d'une régulation de niveau susceptible d'être mise hors service lors du soulèvement et de l'abaissement du véhicule, et sont réalisés en tant que détecteur pour la commande de freinage en fonction de la charge.
